# EUROPÄISCHE PATENTSCHRIFT

(11) **EP 1 999 392 B1**
(45) Veröffentlichungstag und Bekanntmachung des Hinweises auf die Patenterteilung: **21.10.2009**
(21) Anmeldenummer: 07726531.2
(22) Anmeldetag: 27.02.2007
(51) Int. Cl.: F16D 48/06

(54) **VERFAHREN ZUR STEUERUNG EINER AUTOMATISIERTEN REIBUNGSKUPPLUNG**
METHOD FOR CONTROLLING AN AUTOMATED FRICTION CLUTCH
PROCÉDÉ DE COMMANDE D'UN EMBRAYAGE AUTOMATIQUE À FROTTEMENT

(30) Priorität: 28.03.2006 DE 102006014141
(43) Veröffentlichungstag der Anmeldung: 10.12.2008
(73) Patentinhaber: ZF Friedrichshafen AG, 88038 Friedrichshafen (DE)
(72) Erfinder: DÖBELE, Bernd, 88682 Salem (DE); MILLER, Martin, 88090 Immenstaad (DE)
(86) Internationale Anmeldenummer: PCT/EP2007/051832
(87) Internationale Veröffentlichungsnummer: WO 2007/110292

(56) Entgegenhaltungen:
- WO-A-02/25131
- WO-A-03/019026
- DE-A1- 10 103 843
- US-A- 5 630 773
- US-A- 5 850 898

## Beschreibung

Die Erfindung betrifft ein Verfahren zur Steuerung einer automatisierten Reibungskupplung, die in einem Antriebsstrang eines Kraftfahrzeugs im Kraftfluss zwischen einem Antriebsmotor und einem Fahrgetriebe angeordnet ist, die mittels Federanpressung passiv schließbar ausgebildet und mittels eines druckmittelbetätigten Kupplungsstellers aus- und einrückbar ist, wobei die Stellposition des Kupplungsstellers oder eines zugeordneten Übertragungselementes erfasst und zur Steuerung der Reibungskupplung verwendet wird.

Automatisierte Reibungskupplungen der vorbezeichneten Art sind vorwiegend als Trockenkupplungen mit mindestens einer Mitnehmerscheibe und mit einer Federanpressung durch mindestens eine Anpressfeder ausgebildet, da diese Bauart besonders ausgereift und robust ist sowie eine kurze axiale Baulänge aufweist. Aufgrund des im stellkraftlosen Ruhezustand geschlossenen Betriebszustands ermöglicht diese Kupplungsbauart zudem ein sicheres Abstellen des betreffenden Kraftfahrzeugs durch das Einlegen einer Gangstufe zusätzlich zu der Betätigung der Feststellbremse.

Die Reibungskupplung wird jeweils hauptsächlich zur Überbrückung von Drehzahldifferenzen zwischen dem Antriebsmotor des Fahrzeugs und der Eingangswelle des Getriebes beim Anfahren und nach Gangschaltungen, sowie zur lastfreien Durchführung der Gangschaltungen geöffnet und nachfolgend geregelt geschlossen, wobei das jeweilige Kupplungsmoment, also das durch die Reibungskupplung momentan übertragbare Drehmoment (Kupplungskapazität), über einen hydraulisch oder pneumatisch betätigten Kupplungssteller eingestellt wird.

Der Kupplungssteller kann beispielsweise als ein druckmittelbetätigter Stellzylinder ausgebildet sein, der außerhalb der Reibungskupplung angeordnet ist, und dessen Stellkolben über einen Ausrückhebel mit einem axialbeweglich auf einer gehäusefesten Führungshülse gelagerten Ausrücklager in Verbindung steht, das z.B. mit den Federzungen einer als Membranfeder ausgebildeten Anpressfeder in Kontakt stehen kann. Alternativ dazu ist jedoch auch eine Ausbildung des Kupplungsstellers als ein so genannter Zentralausrücker möglich, bei dem ein ringförmiger Stellkolben eines koaxial zu der Eingangswelle des Fahrgetriebes gehäusefest angeordneten ringzylindrischen Stellzylinders unmittelbar mit dem Ausrücklager verbunden ist.

Der Kupplungssteller ist im einfachsten Fall als ein einfach wirkender Stellzylinder mit einem Stellkolben, einem Druckraum und einer Rückstellfeder ausgebildet. Die Ansteuerung eines derartigen Kupplungsstellers kann auf einfache Weise über mindestens ein Proportionalsteuerventil, insbesondere ein 3/2-Wege-Magnetsteuerventil, erfolgen, weiches einen mit einer Druckleitung verbundenen ersten Eingang, einen mit einer Drucktosteitung verbundenen zweiten Eingang sowie einen mit dem Druckraum des Kupplungsstellers verbundenen Ausgang aufweist. Möglich ist hierzu jedoch auch die Verwendung von mindestens zwei Taktventilen, insbesondere von 2/2-Wege-Magnettaktventilen, mit jeweils einem mit der Druckleitung oder der Drucklosleitung verbundenen Eingang und einem mit dem Druckraum des Kupplungsstellers verbundenen Ausgang.

Die Einstellung eines bestimmten Kupplungsmomentes, beispielsweise eines relativ großen Anfahrmomentes oder eines relativ kleinen Kriechmomentes, erfolgt bislang ausschließlich weggesteuert, also nach einer Drehmomentkennlinie, welche das Kupplungsmoment der Reibungskupplung als Funktion des Stellweges bzw. des Ausrückweges des Kupplungsstellers oder eines Übertragungselementes, wie eines Ausrückhebels oder eines Ausrücklagers, wiedergibt. Hierzu wird der entsprechende Stellweg mittels eines Wegsensors erfasst und der in dem Kupplungssteller wirksame Stelldruck solange verändert, also aus dem geschlossenen Zustand heraus erhöht und aus dem geöffneten Zustand heraus verringert, bis der gewünschte Sollwert des Stellweges erreicht ist. Wird hierbei eine Abweichung des Istwertes des Stellweges von dem Sollwert festgestellt, so wird der Stelldruck entsprechend der Abweichung erhöht oder verringert, bis die Abweichung im Rahmen einer vorgegebenen Toleranz aufgehoben ist.

Kommt es dabei zu einer größeren Abweichung der Istposition des Stellweges von der Sollposition, die z.B. durch ein Klemmen aufgrund von Verschleiß, Verunreinigungen oder Schmierungsmangel an den Gleitflächen zwischen dem Ausrücklager und der Führungshülse oder in einem Gelenk des Ausrückhebels verursacht sein kann, so ergibt sich daraus eine größere Abweichung des Stelldruckes des Kupplungsstellers von der zugeordneten Stellposition. Zur Aufhebung dieser Stellwegdifferenz wird bislang, also bei rein wegabhängiger Steuerung, der der Sollposition des Stellweges zugeordnete Solldruck entsprechend weit übersteuert, welches nachteilig zu einer ruckartigen Überbrückung und damit zu einem Übersteuern der Stellwegdifferenz führen kann.

Besonders kritisch ist in dieser Hinsicht ein Anfahrvorgang zu sehen, bei dem die Reibungskupplung ausgehend von dem geöffneten Zustand und mit eingelegter Anfahrgangstufe in Richtung auf das gewünschte Anfahrmoment geschlossen, also der Stelldruck des Kupplungsstellers entsprechend reduziert wird. Wenn dabei eine negative Stellwegdifferenz mit einer zu großen lstposition des Stellweges bzw. Ausrückweges auftritt, so wird der Stelldruck des Kupplungsstellers zwangsläufig auf einen niedrigeren Wert als den Solldruck eingestellt, der dem gewünschten Sollwert des Kupplungsmomentes entsprechen würde. Wenn dann die aufgetretene Stellwegdifferenz ruckartig überbrückt und damit die Reibungskupplung übersteuert und demnach zu weit geschlossen wird, so wird zumindest kurzzeitig ein größeres Kupplungsmoment übertragen. Dies kann entweder zu einem unerwünscht ruckartigen Anfahren des Kraftfahrzeugs oder zu einem ebenso unerwünschten Abwürgen des Antriebsmotors führen.

Der Erfindung liegt daher die Aufgabe zugrunde, ein Verfahren zur Steuerung einer automatisierten Reibungskupplung der eingangs genannten Art vorzuschlagen, mit dem eine exaktere Steuerung der Reibungskupplung möglich ist und die vorbeschriebenen Nachteile vermieden werden können.

Zur Lösung dieser Aufgabe wird gemäß den Merkmalen des Hauptanspruchs ein Verfahren zur Steuerung einer automatisierten Reibungskupplung vorgeschlagen, die in einem Antriebsstrang eines Kraftfahrzeugs im Kraftfluss zwischen einem Antriebsmotor und einem Fahrgetriebe angeordnet ist, und die mittels Federanpressung passiv schließbar ausgebildet sowie mittels eines druckmittelbetätigten Kupplungsstellers aus- und einrückbar ist, wobei die Stellposition x_K des Kupplungsstellers oder eines zugeordneten Übertragungselementes erfasst und zur Steuerung der Reibungskupplung verwendet wird.

Verfahrensgemäß ist zudem vorgesehen, dass zusätzlich ein Stelldruck p_K des Kupplungsstellers ermittelt wird, und dass eine einzustellende Änderung des Kupplungsmomentes M_K auf einen neuen Sollwert M K_soll druckgesteuert erfolgt, indem der Stelldruck p_K des Kupplungsstellers auf einen Sollwert p_K_soll eingestellt wird, der dem Sollwert M_K__soll des Kupplungsmomentes M_K entspricht.

Verfahrensgemäß erfolgt nach dem Erreichen des Solldruckes p_K_soll zum Erreichen der Sollposition x_K_soll und damit des Sollwertes M_K_soll des Kupplungsmomentes M_K zweckmäßig eine Übersteuerung des Solldruckes p_K_soll, sofern eine Stellwegdifferenz Δx_K = x_K_soll - x_K_ist festgestellt wird.

Die Verfahrenschritte des Oberbegriffs des Anspruchs 1 sind aus US-A-5850898 bekannt. Dokument WO02/25131 zeigt ein Verfahren zur Steuerung einer Reibungskupplung wobei ein Dithersignal zur Stellregelung hinzugefügt wird.

Dabei erfolgt die Überbrückung der entsprechenden Druckdifferenz Δp_K = p_K-soll - p_K_ist bei einer Ansteuerung des Kupplungsstellers mit einem Proportionalventil kontinuierlich und bei einer Ansteuerung mit mindestens zwei Taktventilen durch eine entsprechende Anzahl von Betätigungsimpulsen schrittweise.

Vorteilhafte und zweckmäßige Ausgestattungen und Weiterbildungen des Verfahrens sind Gegenstand der Unteransprüche.

Durch die druckgesteuerte Einstellung des Sollwertes des Kupplungsmomentes M_K_sott wird eine Übersteuerung des Kupplungsmomentes der Reibungskupplung und die damit verbundenen Nachteile bekannter Steuerungsverfahren zuverlässig verhindert. Der konkrete Anwendungsbereich der druckabhängigen Steuerung richtet sich zweckmäßig nach der bauartbedingten Stelldruck-Kennlinie p_K = f (x_K) der Reibungskupplung.

Die Änderung des Kupplungmomentes M_K auf einen neuen Sollwert M_K_sott kann, unabhängig von dem Verlauf der jeweiligen Stelldruck-Kennlinie p_K = f (x_K) der Reibungskupplung, zunächst weggesteuert erfolgen, und erst bei der Annäherung des Stellweges x_K an die Sollposition x_K_soll druckgesteuert durchgeführt werden, da dies im Allgemeinen einen schnelleren Steuerungsablauf ermöglicht.

Besonders vorteilhaft ist die Anwendung eines derartigen Steuerungsablaufs aber bei einer Reibungskupplung, deren Stelldruck-Kennlinie p_K = f(x_K) mit zunehmendem Ausrückweg x_K zuerst ansteigt, dann ein relatives Maximum aufweist und danach wieder abfällt, also nicht monoton steigend ist. Derartige Stelldruck-Kennlinien sind typisch für Reibungskupplungen, deren Anpressfeder als eine Membranfeder ausgebildet ist, und die keine zusätzlichen Kompensationsfedern zur Aufhebung dieses Effektes aufweisen. Da in diesem Fall ein eindeutiger Zusammenhang zwischen dem Stelldruck p_K und dem Stellweg x_K sowie damit auch mit dem Kupplungsmoment M_K nur abschnittsweise besteht, erfolgt die Einstellung des Sollmomentes M_K_soll besonders in diesem Fall bevorzugt zuerst weggesteuert und erst in der Nähe der Sollposition x_K_sott druckgesteuert.

Ebenso kann bei allen Kupplungsbauarten, bevorzugt jedoch bei Reibungskupplungen mit nicht monoton steigender Stelldruck-Kennlinie p_K = f (x_K), die Änderung des Kupplungmomentes M_K auf einen neuen Sollwert M_K_soll zunächst weggesteuert erfolgen, und erst bei der Feststellung einer größeren Stellwegdifferenz Δx_K = x_K_sott - x_K_ist druckgesteuert durchgeführt werden. Tritt dabei keine Stellwegdifferenz Δx_K = x_K_soll - x_K_ist auf, so erfolgt die Einstellung des Sollmomentes M_K_soll insgesamt weggesteuert durch die Einstellung des zugeordneten Sollwertes x_K_soll des Stellweges x_K, bei dem dann auch das vorgesehene Sollmoment M_K_soll erreicht wird.

Bei einer Reibungskupplung mit einer monoton steigenden Stelldruck-Kennlinie p_K = f (x_K) kann die Änderung des Kupplungmomentes M_K auf einen neuen Sollwert M_K_sott dagegen uneingeschränkt, also von Anfang an bis zum Erreichen des Sollwertes p_K_soll des Stelldruckes p_K, druckgesteuert durchgeführt werden.

Der Stelldruck p_K wird wegen der dadurch erzielbaren hohen Genauigkeit bevorzugt mittels eines Drucksensors erfasst, der an den Druckraum des Kupplungsstellers oder an eine zu dem Druckraum des Kupplungsstellers führende Anschlussleitung angeschlossen ist. Alternativ dazu ist jedoch auch die Berechnung des Stelldruckes p_K aus geeigneten Mess- und/oder Steuergrößen möglich.

Bei der druckabhängigen Steuerung der Reibungskupplung wird der Sollwert p_K_sott des Stelldruckes p_K zweckmäßig aus einer in einem Datenspeicher abgelegten Kennlinie des Kupplungsmomentes als Funktion des Stelldruckes M_K = f (p_K) ermittelt. Alternativ dazu ist aber auch eine Ermittlung des Sollwertes p_K_soll des Stelldruckes p_K aus einer in einem Datenspeicher abgelegten ersten Kennlinie des Kupplungsmomentes als Funktion des Stellweges M_K = f (x_K) und aus einer in einem Datenspeicher abgelegten zweiten Kennlinie des Stelldruckes als Funktion des Stellweges p_K = f (x_K) möglich.

Des weiteren kann die Einstellung des Solldruckes p_K_soll auch in Abhängigkeit von der zu überbrückenden Druckdifferenz Δp_K = p_K_soll - p_K_ist erfolgen, indem der Sollwert p_K_soll des Stelldruckes p_K aus einer in einem Datenspeicher abgelegten ersten Kennlinie des Kupplungsmomentes als Funktion des Stellweges M_K = f (x_K) und aus einer in einem Datenspeicher abgelegten zweiten Kennlinie der Stellwegänderung als Funktion der Stelldruckänderung Δx_K = f (Δp_K) mit Δx K = x_K_soll - x_K ist und Δp_K = p_K_soll - p_K_ist ermittelt wird.

Zur Vermeidung der vorbeschriebenen Nachteile sollte eine derartige Übersteuerung des Solldruckes p_K_soll zum Erreichen der Sollposition x_K_soll jedoch erst nach Ablauf einer vorab festgelegten Wartezeit und vorzugsweise stark verlangsamt erfolgen.

Des Weiteren sollte eine Übersteuerung des Solldruckes p_K_soll zum Erreichen der Sollposition x_K_soll nur durchgeführt werden, wenn bestimmte Sicherheitsbedingungen erfüllt sind.

Beispielsweise kann in diesem Zusammenhang vorgesehen sein, dass eine Übersteuerung des Solldruckes p_K_soll zum Erreichen der Sollposition x_K_soll bei Fahrzeugstillstand oder bei niedriger Fahrgeschwindigkeit nur erfolgt, wenn zeitgleich eine Betätigung der Feststellbremse, eine Betätigung der Betriebsbremse oder eine Betätigung des Fahrpedals in Richtung einer erhöhten Leistungsanforderung sensiert wird, da hierdurch ein ruckartiges Anfahren und eine ungewollte Beschleunigung des Kraftfahrzeugs oder ein Abwürgen des Antriebsmotors verhindert werden können.

Eine Übersteuerung des Solldruckes p_K_soll zum Erreichen der Sollposition x_K_soll wird bevorzugt zyklisch durchgeführt, wobei der Stelldruck p_K jeweils auf den Solldruck p_K_soll zurückgeführt wird, da hierdurch eine möglicherweise vorliegende Verklemmung am ehesten gelöst werden kann. Hierbei wird bevorzugt die Frequenz und/oder die Druckamplitude der zyklischen Übersteuerung des Solldruckes p_K_soll mit zunehmender Stellwegdifferenz Δx_K = x_K_sott - x_K_ist erhöht. Zur praktischen Erzeugung der zyklischen Übersteuerung des Solldruckes p_K_soll wird ein dem Kupplungssteller zugeordnetes Proportionalventil mit wechselnder Richtung und zugeordnete druckerhöhende und druckabbauende Taktventile wechselweise betätigt.

Zur Verdeutlichung der Erfindung sind der Beschreibung Zeichnungen beigefügt. In diesen zeigen:
- Fig. 1: ein Diagramm des Kupplungsmomentes einer Reibungskupplung und des Stelldruckes eines zugeordneten Kupplungsstellers, jeweils über dem Stellweg,
- Fig. 2: ein Diagramm des Kupplungsmomentes einer anderen Reibungskupplung und des Stelldruckes eines zugeordneten Kupplungsstellers jeweils über dem Stellweg,
- Fig. 3: eine erste Kupplungsanordnung zur Anwendung des erfindungsgemäßen Verfahrens, und
- Fig. 4: eine zweite Kupplungsanordnung zur Anwendung des erfindungsgemäßen Verfahrens.

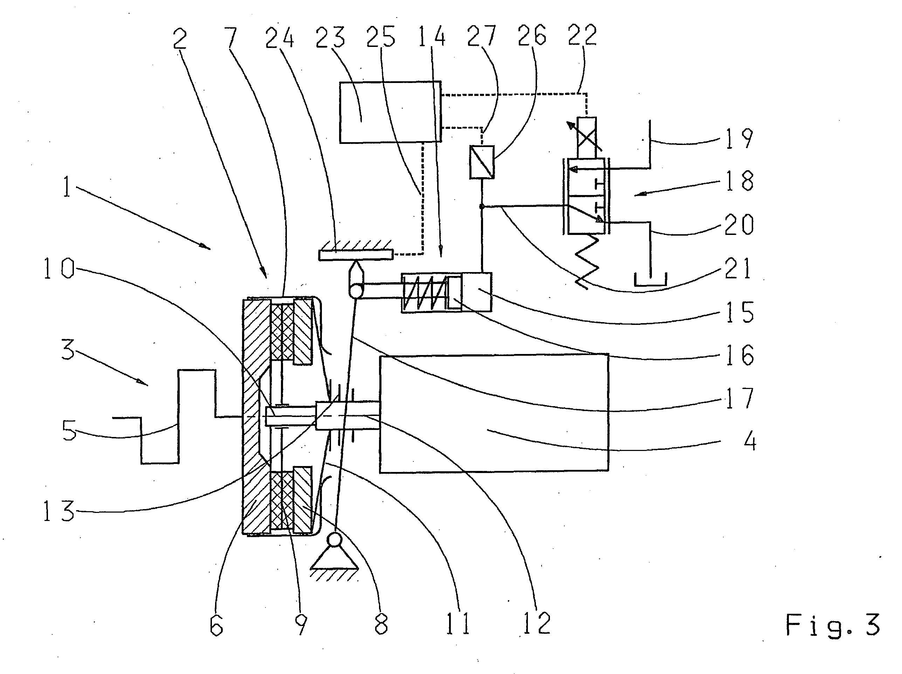

In Fig. 3 ist eine erste Kupplungsanordnung 1 zur Anwendung des erfindungsgemäßen Verfahrens abgebildet. Dort ist eine als Einscheiben-Trockenkupplung ausgebildete Reibungskupplung 2 im Kraftfluss zwischen einem als Verbrennungskolbenmotor ausgebildeten Antriebsmotor 3 und einem Fahrgetriebe 4 angeordnet.

Der eingangsseitige Teil der Reibungskupplung 2 wird von einem an der Kurbelwelle 5 des Antriebsmotors 3 befestigten Schwungrad 6 und einer über einen Kupplungskorb 7 mit diesem verbundenen Druckplatte 8 gebildet. Der ausgangsseitige Teil der Reibungskupplung 2 ist durch eine axial zwischen dem Schwungrad 6 und der Druckplatte 8 angeordneten Mitnehmerscheibe 9 gebildet, die drehfest und axial verschiebbar auf der Eingangswelle 10 des Fahrgetriebes 4 gelagert ist. Durch eine zwischen dem Kupplungskorb 7 und der Druckplatte 8 angeordnete, als Membranfeder ausgebildete Anpressfeder 11 ist die Reibungskupplung 2 im stellkraftfreien Ruhezustand geschlossen und über ein auf einer gehäusefesten Führungshülse 12 axialbeweglich gelagertes und an radial innere Federzungen der Anpressfeder 11 anliegendes Ausrücklager 13 aus- und einrückbar.

Die Betätigung des Ausrücklagers 13 und damit die Einstellung eines gewünschten Kupplungsmomentes M_K_soll der Reibungskupplung 2 erfolgt über einen druckmittelbetätigten Kupplungssteller 14, der vorliegend als ein einfach wirksamer Stellzylinder mit einem axialbeweglich gelagerten und durch einen in einem Druckraum 15 wirksamen Stelldruck p_K gegen die Rückstellkraft einer Rückstellfeder verschiebbaren Stellkolben 16 ausgebildet ist. Der Stellkolben 16 steht mit seiner Kolbenstange über einen am Gehäuse schwenkbar gelagerten Ausrückhebel 17 derart mit dem Ausrücklager 13 in Verbindung, dass ein ansteigender Stelldruck p_K zu einem Ausrücken der Reibungskupplung 2 und somit zu einer Verringerung des Kupplungsmomentes M_K führt.

Die Ansteuerung des Kupplungsstellers 14 erfolgt über ein Steuerungsventil 18, das vorliegend als ein 3/2-Wege-Proportionalmagnetventil mit zwei Eingängen und einem Ausgang ausgebildet ist, wobei der erste Eingang mit einer Druckleitung 19, der zweite Eingang mit einer Drucklosleitung 20, und der Ausgang über eine Verbindungsleitung 21 mit dem Druckraum 15 des Kupplungsstellers 14 verbunden ist.

Zur Ansteuerung des Steuerungsventils 18 steht dieses über eine elektrische Steuerleitung 22 mit einem Steuergerät 23 in Verbindung. Eine Änderung des Kupplungsmomentes M_K erfolgt somit bauartbedingt durch eine kontinuierliche Änderung des Stelldruckes p_K des Kupplungsstellers 14.

Zur Erfassung der Stellposition x_K des Stellkolbens 16 bzw. des Ausrückhebels 17 ist im Bereich der Kolbenstange des Stellkolbens 16 ein Wegsensor 24 angeordnet, der über eine Sensorleitung 25 mit dem Steuergerät 23 in Verbindung steht. Zur Erfassung des Stelldruckes p_K des Kupplungsstellers 14 ist an die Verbindungsleitung 21 ein Drucksensor 26 angeschlossen, der über eine Sensorleitung 27 mit dem Steuergerät 23 in Verbindung steht. Somit ist prinzipiell sowohl eine wegabhängige Steuerung als auch eine druckabhängige Steuerung der Reibungskupplung 2 möglich.

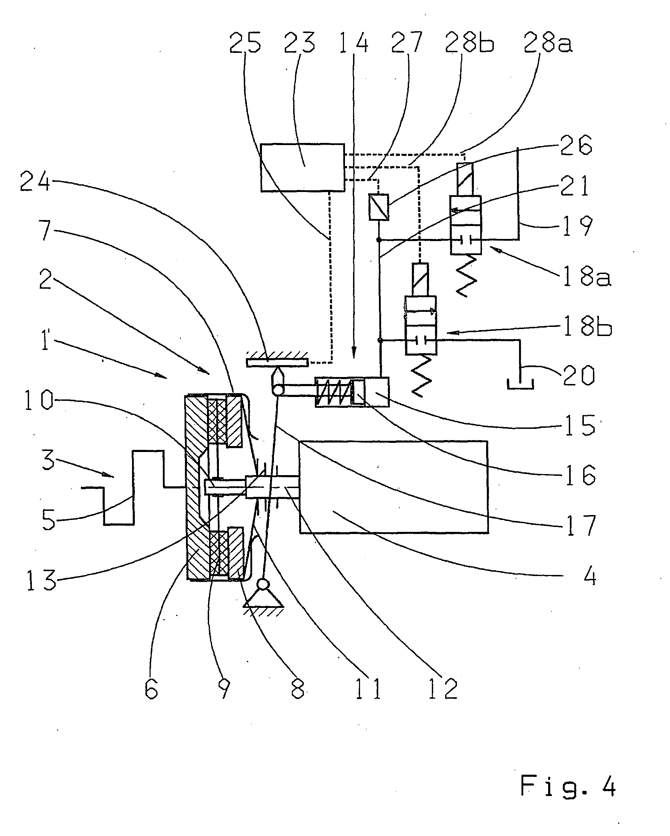

In einer weiteren Kupplungsanordnung 1' gemäß Fig. 4 sind bei sonst gleicher Ausbildung und Anordnung im Unterschied zu der Kupplungsanordnung 1 nach Fig. 3 zur Ansteuerung des Kupplungsstellers 14 zwei als 2/2-Wege-Magnettaktventile ausgebildete Steuerungsventile 18a und 18b mit jeweils einem Eingang und einem Ausgang vorgesehen. Der Eingang des ersten Taktventils 18a ist mit der Druckleitung 19 und dessen Ausgang über die Verbindungsleitung 21 mit dem Druckraum 15 des Kupplungsstellers 14 verbunden. Der Eingang des zweiten Taktventils 18b ist mit der Drucklosleitung 20 und dessen Ausgang über die Verbindungsleitung 21 mit dem Druckraum 15 des Kupplungsstellers 14 verbunden. Beide Taktventile 18a und 18b stehen über jeweils eine elektrische Steuerleitung 22a bzw. 22b mit dem Steuergerät 23 in Verbindung. Eine Änderung des Kupplungsmomentes M_K erfolgt in diesem Fall bauartbedingt durch eine schrittweise Änderung des Stelldruckes p_K.

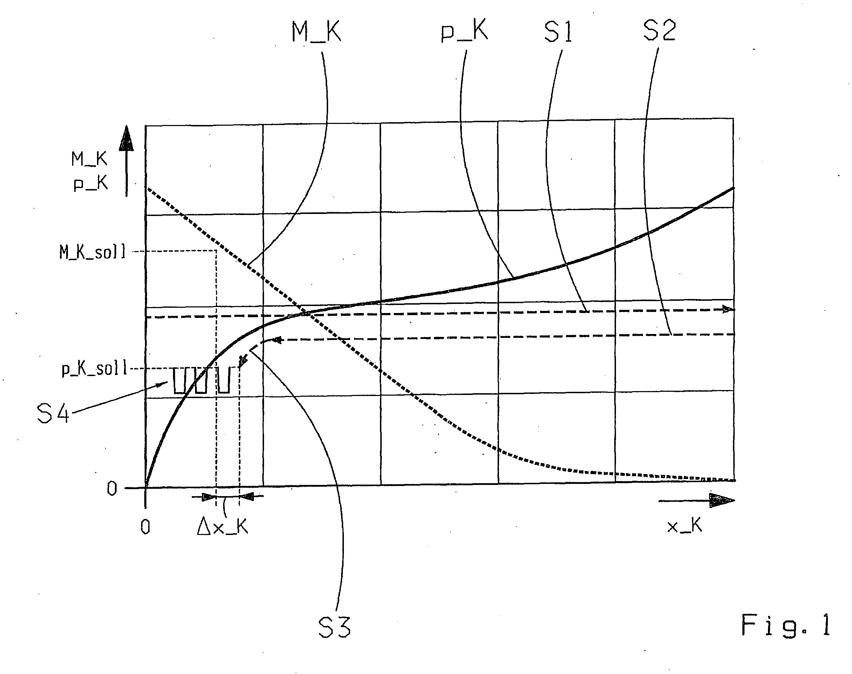

In dem Diagramm von Fig. 1 sind für die Kupplungsanordnungen 1 gemäß Fig. 3 und 1 gemäß Fig. 4 beispielhaft die Verläufe des Kupplungsmomentes M_K und des Stelldruckes p_K jeweils über dem Stellweg x_K dargestellt, der vorliegend identisch mit dem Ausrückweg des Kupplungsstellers 14 bzw. des Ausrückhebels 17 ist.

Der Verlauf des Kupplungsmomentes M_K = f (x_K) ist monoton fallend, und der Verlauf des Stelldruckes p_K = f (x_K) ist monoton steigend, so dass jeweils eine eindeutige Beziehung zwischen dem Kupplungsmoment M_K, dem Stelldruck p_K und dem Stellweg x_K besteht bzw. abgeleitet werden kann. Die Einstellung eines bestimmten Kupplungsmomentes M_K_soll könnte somit alternativ zur bisherigen rein wegabhängigen Steuerung in diesem Fall auch vollständig druckgesteuert erfolgen. Zur Beschleunigung des Steuerungsverlaufs ist jedoch bevorzugt vorgesehen, dass die Grobsteuerung, also die Steuerung bis in die Nähe der entsprechenden Sollposition x_K_soll des Stellweges x_K und/oder bis zur Feststellung einer größeren Stellwegdifferenz Δx_K = x_K_soll - x_K_ist zunächst weggesteuert wird, und erst danach druckgesteuert erfolgt.

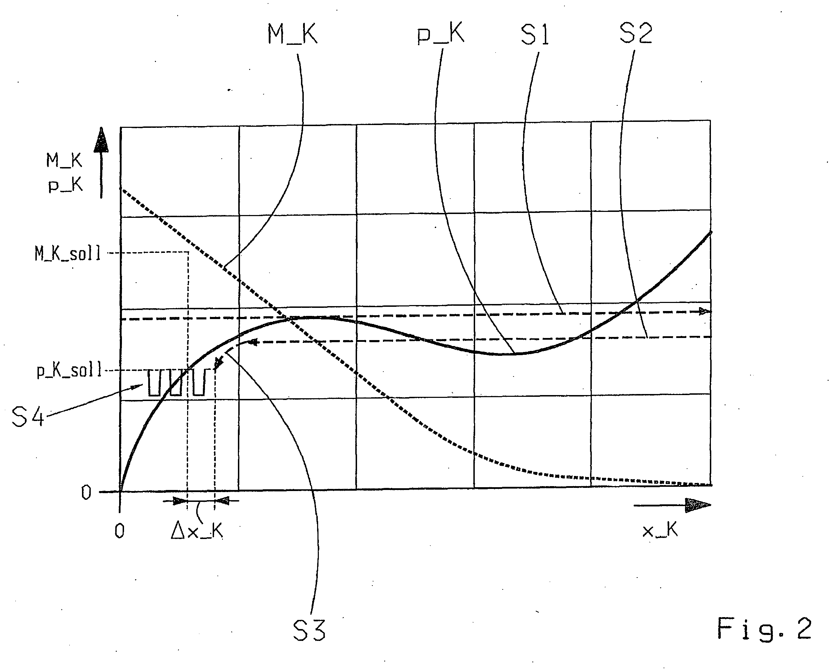

Diese Vorgehensweise hat auch den Vorteil, dass sie auch bei Reibungskupplungen 2 mit nicht monoton steigender Stelldruck-Kennlinie p_K = f (x_K) angewendet werden kann, wie sie Reibungskupplungen 2 mit einer als Membranfeder ausgebildeten Anpressfeder 11 ohne weitere Kompensationsfedern aufweisen. Ein entsprechender Verlauf der Stelldruck-Kennlinie p_K = f (x_K) ist beispielhaft zusammen mit dem entsprechenden Verlauf des Kupplungsmomentes M_K = f (x_K) in Fig. 2 abgebildet.

In den beiden Diagrammen von Fig. 1 und Fig. 2 ist jeweils veranschaulicht, wie ein bestimmtes Kupplungsmoment M_K_soll zum Anfahren eingestellt wird. Zunächst erfolgt in Schritt S1 die vollständige Öffnung der Reibungskupplung weggesteuert (Strich-Punkt-Pfeillinie, nach rechts weisend). Danach wird der Anfahrgang eingelegt und die Reibungskupplung in Schritt 2 (Strich-Punkt-Pfeillinie, nach links weisend) zunächst weggesteuert solange geschlossen, bis sich die Istposition x_K_ist des Stellweges x_K in der Nähe der Sollposition x_K_soll befindet, bzw. bis eine größere Stellwegdifferenz Δx_K = x_K_soll - x_K_ist festgestellt wird.

Danach erfolgt die weitere Steuerung der Kupplungsbetätigung druckgesteuert, indem in Schritt S3 in dem Kupplungssteller 14 der dem Sollmoment M_K_soll zugeordnete Solldruck p_K_soll eingestellt wird. Liegt nach dem Erreichen des Solldruckes p_K_soll weiterhin eine Stellwegdifferenz Δx_K = x_K_soll - x_K_ist vor, so wird in Schritt S4 zum Erreichen der Sollposition x_K_soll eine Übersteuerung des Solldruckes p_K_soll vorgenommen.

Diese Übersteuerung des Solldruckes p_K_soll wird bevorzugt in Form zyklischer Druckänderungen durchgeführt, wobei der Stelldruck p_K jeweils auf den Solldruck p_K_soll zurückgeführt wird, um eine unerwünschte Übersteuerung des Stellweges x_K_soll und damit des Kupplungsmomentes M_K_soll, die durch ein plötzliches Lösen einer Verklemmung z.B. des Ausrücklagers 13 auf der Führungshülse 12 verursacht sein kann, zu vermeiden.

### Bezugszeichen

- 1: Kupplungsanordnung
- 1': Kupplungsanordnung
- 2: Reibungskupplung
- 3: Antriebsmotor
- 4: Fahrgetriebe
- 5: Kurbelwelle
- 6: Schwungrad
- 7: Kupplungskorb
- 8: Druckplatte
- 9: Mitnehmerscheibe
- 10: Eingangswelle
- 11: Anpressfeder
- 12: Führungshülse
- 13: Ausrücklager
- 14: Kupplungssteller
- 15: Druckraum
- 16: Stellkolben
- 17: Ausrückhebel
- 18: Steuerungsventil
- 18a: Steuerungsventil
- 18b: Steuerungsventil
- 19: Druckleitung
- 20: Drucklosleitung
- 21: Verbindungsleitung
- 22: Steuerleitung
- 22a: Steuerleitung
- 22b: Steuerleitung
- 23: Steuergerät
- 24: Wegsensor
- 25: Sensorleitung
- 26: Drucksensor
- 27: Sensorleitung

- M_K: Kupplungsmoment
- M_K_ist: Istmoment, Istwert von M_K
- M_K_soll: Sollmoment, Sollwert von M_K
- p_K: Stelldruck
- p_K_ist: lstdruck, Istwert von p_K
- p_K_soll: Solldruck, Sollwert von p_K
- Δp_K: Stelldruckänderung
- S1: Schritt 1
- S2: Schritt 2
- S3: Schritt 3
- S4: Schritt 4
- x_K: Stellweg, Stellposition
- x K_ist: Istposition, Istwert von x_K
- x K_soll: Sollposition, Sollwert von x_K
- Δx_K: Stellwegdifferenz, Stellwegänderung

## Patentansprüche

1. Verfahren zur Steuerung einer automatisierten Reibungskupplung, die in einem Antriebsstrang eines Kraftfahrzeugs im Kraftfluss zwischen einem Antriebsmotor (3) und einem Fahrgetriebe (4) angeordnet ist, die mittels Federanpressung passiv schließbar ausgebildet und mittels eines druckmittelbetätigten Kupplungsstellers (14) aus- und einrückbar ist, wobei die Stellposition (x_K) des Kupplungsstellers (14) oder eines zugeordneten Übertragungselementes erfasst und zur Steuerung der Reibungskupplung (2) verwendet wird, wobei zusätzlich ein Stelldruck (p_K) des Kupplungsstellers (14) ermittelt wird, und dass eine einzustellende Änderung des Kupplungmomentes (M_K) auf einen neuen Sollwert (M_K_soll) druckgesteuert erfolgt indem der Stelldruck (p_K) des Kupplungsstellers (14) auf einen Sollwert (p_K_soll) eingestellt wird, der dem Sollwert (M_K_soll) des Kupplungsmomentes (M_K) entspricht, **dadurch gekennzeichnet, dass** nach der Einstellung des Solldruckes (p_K_soll) bei einer festgestellten Stellwegdifferenz (Δx_K = x_K_soll - x_K_ist) eine Übersteuerung des Solldruckes (p_K_soll) zum Erreichen der Sollposition (x_K_soll) durchgeführt wird.

2. Verfahren nach Anspruch 1, **dadurch gekennzeichnet, dass** eine Übersteuerung des Solldruckes (p_K_soll) zum Erreichen der Sollposition. (x_K_soll) erst nach Ablauf einer vorab festgelegten Wartezeit erfolgt.

3. Verfahren nach einem der Anspruch 1 oder 2, **dadurch gekennzeichnet, dass** eine Übersteuerung des Solldruckes (p_K_soll) zum Erreichen der Sollposition (x_K_soll) nur stark verlangsamt erfolgt.

4. Verfahren nach wenigstens einem der Ansprüche 1 bis 3, **dadurch gekennzeichnet, dass** eine Übersteuerung des Solldruckes (p_K soll) zum Erreichen der Sollposition (x_K_soll) nur durchgeführt wird, wenn bestimmte Sicherheitsbedingungen erfüllt sind.

5. Verfahren nach Anspruch 4, **dadurch gekennzeichnet, dass** eine Übersteuerung des Solldruckes (p_K_soll) zum Erreichen der Sollposition (x_K_soll) bei Fahrzeugstillstand oder bei niedriger Fahrgeschwindigkeit nur erfolgt, wenn zeitgleich eine Betätigung der Feststellbremse sensiert wird.

6. Verfahren nach Anspruch 4 oder 5, **dadurch gekennzeichnet, dass** eine Übersteuerung des Solldruckes (p_K_soll) zum Erreichen der Sollposition (x_K_soll) bei Fahrzeugstillstand oder bei niedriger Fahrgeschwindigkeit nur erfolgt, wenn zeitgleich eine Betätigung der Betriebsbremse sensiert wird

7. Verfahren nach wenigstens einem der Ansprüche 4 bis 6, **dadurch gekennzeichnet, dass** eine Übersteuerung des Solldruckes (p_K_soll) zum Erreichen der Sollposition (x_K_soll) bei Fahrzeugstillstand oder bei niedriger Fahrgeschwindigkeit nur erfolgt, wenn zeitgleich eine Betätigung des Fahrpedals in Richtung einer erhöhten Leistungsanforderung sensiert wird.

8. Verfahren nach wenigstens einem der Ansprüche 4 bis 7, **dadurch gekennzeichnet, dass** zum Erreichen der Sollposition (x_K_soll) eine zyklische Übersteuerung des Solldruckes (p_K_soll) durchgeführt wird, wobei der Stelldruck (p_K) jeweils auf den Solldruck (p_K_soll) zurückgeführt wird.

9. Verfahren nach Anspruch 8, **dadurch gekennzeichnet, dass** die Frequenz und/oder die Druckamplitude der zyklischen Übersteuerung des Solldruckes (p_K_soll mit zunehmender Stellwegdifferenz (Δx_K = x_K_soll - x_K_ist) erhöht wird.

## Claims

1. Method for controlling an automated friction clutch which is arranged in a drive train of a motor vehicle in the force flux between a drive motor (3) and a gearbox (4), which is designed in such a way that it can be closed passively by means of spring contact pressure, and which can be disengaged and engaged by means of a pressure-medium-activated clutch actuator, wherein said position (x_K) of the clutch actuator (14) or of an assigned transmission element is sensed and is used to control the friction clutch (2), wherein, in addition, an actuating pressure (p_K) of the clutch actuator (14) is determined, and in that a change which is to be made in the clutch torque (M_K) to a new setpoint value (M_K_setp) is carried out under pressure control by setting the actuation pressure (p_K) of the clutch actuator (14) to a setpoint value (p_K_setp) which corresponds to the setpoint value (M_K_setp) of the clutch torque (M_K), **characterized in that,** after the setpoint pressure (p_K_setp) has been set at a defined actuating travel difference (Δx_K=x_K_setp-x_K_act), the setpoint pressure (p_K_setp) is overdriven in order to reach the setpoint position (x_K_setp).

2. Method according to Claim 1, **characterized in that** overdriving of the setpoint pressure (p_K_setp) in order to reach the setpoint position (x_K_setp) does not take place until after a previously defined waiting time has expired.-

3. Method according to one of Claims 1 or 2, **characterized in that** overdriving of the setpoint pressure (p_K_setp) in order to reach the setpoint position (x_K_setp) takes place only in a very slowed-down fashion.

4. Method according to at least one of Claims 1 to 3, **characterized in that** overdriving of the setpoint pressure (p_K_setp) in order to reach the setpoint position (x_K_setp) is carried out only if certain safety conditions are met.

5. Method according to Claim 4, **characterized in that** overdriving of the setpoint pressure (p_K_setp) in order to reach the setpoint position (x_K_setp) when the vehicle is stationary or when the velocity is low occurs only if activation of the parking brake is sensed at the same time.

6. Method according to Claim 4 or 5, **characterized in that** overdriving of the setpoint pressure (p_K_setp) in order to reach the setpoint position (x_K_setp) when the vehicle is stationary or when the velocity is low occurs only if activation of the service brake is sensed at the same time.

7. Method according to at least one of Claims 4 to 6, **characterized in that** overdriving of the setpoint pressure (p_K_setp) in order to reach the setpoint position (x_K_setp) when the vehicle is stationary or when the velocity is low occurs only if activation of the accelerator pedal in the direction of an increased power requirement is sensed at the same time.

8. Method according to at least one of Claims 4 to 7, **characterized in that,** in order to reach the setpoint position (x_K_setp), cyclical overdriving of the setpoint pressure (p_K_setp) is carried out, wherein the actuating pressure (p_K) is returned in each case to the setpoint pressure (p_K_setp).

9. Method according to Claim 8, **characterized in that** the frequency and/or the pressure amplitude of the cyclical overdriving of the setpoint pressure (p_K_setp) is increased as the difference in the actuating travel (Δx K=x K setp-x K act) increases.

## Revendications

1. Procédé de commande d'un embrayage automatisé à frottement, qui est disposé dans une transmission d'un véhicule automobile, dans le flux de force entre un moteur d'entraînement (3) et une transmission (4), qui est réalisé de manière à pouvoir être fermé passivement au moyen d'une pression d'un ressort et qui peut être débrayé et embrayé au moyen d'un régulateur d'embrayage (14) actionné par un fluide sous pression, la position de réglage (x_K) du régulateur d'embrayage (14) ou d'un élément de transfert associé étant détectée et utilisée pour la commande de l'embrayage de frottement (2), une pression de réglage (p_K) du régulateur d'embrayage (14) étant en outre déterminée, et une variation à ajuster du couple d'embrayage (M_K) s'effectuant par une commande de pression à une nouvelle valeur de consigne (M_K_soll), la pression de réglage (p_K) du régulateur d'embrayage (14) étant ajustée à une valeur de consigne (p_K_soll) qui correspond à la valeur de consigne (M_K_soll) du couple d'embrayage (M_K), **caractérisé en ce qu'**après l'ajustement de la pression de consigne (p_K_soll), si l'on constate une différence de course de réglage (Δx K = x_K_soll - x_K_ist), on effectue une neutralisation de la pression de consigne (p_K_soll) pour obtenir la position de consigne (x_K_soll).

2. Procédé selon la revendication 1, **caractérisé en ce que** l'on effectue une neutralisation de la pression de consigne (p_K_soll) pour obtenir la position de consigne (x_K_soll) seulement après l'écoulement d'un temps d'attente préétabli.

3. Procédé selon l'une quelconque des revendications 1 ou 2, **caractérisé en ce que** l'on effectue une neutralisation de la pression de consigne (p_K soll) pour obtenir la position de consigne (x_K_soll) seulement de manière fortement ralentie.

4. Procédé selon au moins l'une quelconque des revendications 1 à 3, **caractérisé en ce que** l'on effectue une neutralisation de la pression de consigne (p_K_soll) pour obtenir la position de consigne (x_K_soll) seulement lorsque certaines conditions de sécurité ont été remplies.

5. Procédé selon la revendication 4, **caractérisé en ce que** l'on effectue une neutralisation de la pression de consigne (p_K_soll) pour obtenir la position de consigne (x_K_soll) à l'arrêt du véhicule ou à faible vitesse de conduite, seulement lorsque l'on détecte simultanément un actionnement du frein de stationnement.

6. Procédé selon la revendication 4 ou 5, **caractérisé en ce que** l'on effectue une neutralisation de la pression de consigne (p_K_soll) pour obtenir la position de consigne (x_K_soll) à l'arrêt du véhicule ou à faible vitesse de conduite, seulement lorsque l'on détecte simultanément un actionnement du frein de service.

7. Procédé selon au moins l'une quelconque des revendications 4 à 6, **caractérisé en ce que** l'on effectue une neutralisation de la pression de consigne (p_K_soll) pour obtenir la position de consigne (x_K_soll) à l'arrêt du véhicule ou à faible vitesse de conduite, seulement lorsque l'on détecte simultanément un actionnement de la pédale d'accélération dans le sens d'une demande de puissance accrue.

8. Procédé selon au moins l'une quelconque des revendications 4 à 7, **caractérisé en ce que** pour obtenir la position de consigne (x_K_soll), on effectue une neutralisation cyclique de la pression de consigne (p_K_soll), la pression de réglage (p_K) étant à chaque fois ramenée à la pression de consigne (p_K_soll).

9. Procédé selon la revendication 8, **caractérisé en ce que** la fréquence et/ou l'amplitude de la pression de la neutralisation cyclique de la pression de consigne (p_K_soll) est augmentée avec l'augmentation de la différence de course de réglage (Δx_K = x_K_soll - x_K_ist).
